(19) Europäisches Patentamt / European Patent Office / Office européen des brevets

(11) **EP 2 293 586 A1**

(12) **EUROPEAN PATENT APPLICATION**

(43) Date of publication:
**09.03.2011 Bulletin 2011/10**

(51) Int Cl.:
***H04N 13/00*** (2006.01)

(21) Application number: **10171778.3**

(22) Date of filing: **03.08.2010**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO SE SI SK SM TR**<br>Designated Extension States:<br>**BA ME RS**<br><br>(30) Priority: **04.08.2009 RU 2009129700**<br>**23.11.2009 KR 20090113357**<br><br>(71) Applicant: **Samsung Electronics Co., Ltd.**<br>**Suwon-si, Gyeonggi-do (KR)** | (72) Inventors:<br>• **Ignatov, Artem Konstantinovich**<br>**680030 Habarovsk (RU)**<br>• **Joesan, Oksana Vasilievna**<br>**119017 Moscow (RU)**<br><br>(74) Representative: **Hewett, Jonathan Michael**<br>**Richard et al**<br>**Venner Shipley LLP**<br>**20 Little Britain**<br>**London EC1A 7DH (GB)** |

(54) **Method and system to transform stereo content**

(57) Methods and systems to process stereo images and video information are described, and, in particular, methods and devices to transfer and/or transform stereo content to decrease eye fatigue of a user during viewing of 3D video. The methods and systems can compute an initial map of disparity/depth for stereo images from 3D video, smooth a depth map, change depth perception parameters according to the estimation of eye fatigue, and generate new stereo image according to the depth perception parameters.

## FIG. 1

EP 2 293 586 A1

**Description**

The present invention relates to methods and systems to process stereo images and video information, and, in particular, to methods and devices to transform stereo content to decrease eye fatigue from a 3D video image.

A 3D (three-dimensional) television (TV) apparatus has become popular as modern television equipment to show a viewer not only bi-dimensional video images, but also 3D video images using stereo images. It is necessary in a 3D television device to be able to change of a depth of the 3D video images to increase a user's comfort when viewing 3D video images. In order to control a depth of the image, it is necessary to solve a problem of synthesizing new views (images). New virtual views (images) are synthesized using information received from a map of disparity/depth, which is calculated based on pairs of input stereo images. Correct disparity computation is a very difficult problem, because quality of synthesized stereo images with the changed depth substantially depends on quality of a depth map. Thus, it is required to apply a certain method of matching each pair of stereo images to generate a raw (initial) map of disparity/depth with the subsequent processing to have an opportunity to apply this method for synthesis of virtual views during demonstration of 3D content.

However, a computation of a disparity or a procedure of matching stereo images has a problem detecting pixel-by-pixel (point-with-point) mapping in a pair of stereo images. Two or more images are generated from a set of cameras, and a map of connections (disparity map) of the images is received on an output, which displays mapping of each point of one image to a similar (corresponding) point of the other image. Received disparity will be large for nearby objects, and will be expressed by a small value for the remote objects. Thus, a disparity map can be an inversion of a depth of an image.

A method of matching stereo image pair may be divided into a local method of working with vicinities of a current pixel and a global method of working with the whole image. The local method can be performed according to an assumption that a calculated function of the disparity can be smooth in a support window of the image. This method can be precisely performed and acceptable to a real-time application. On the other hand, the global method can be used as an explicit function of smoothness to solve an optimization problem. However, it may require complex computing methods, such as dynamic programming or algorithms of sectioning a graph.

Aspects of the present invention provide a method and device to control a depth to display a stereo content as a 3D video image displayed in a 3D television device. The method includes computing an initial map of disparity/depth for a stereo image from a 3D video image, smoothing of depth map, changing depth perception parameters according to an estimation of eye fatigue, and generating a new stereo video image according to the depth perception parameters.

Additional features and utilities of the present invention will be set forth in part in the description which follows and, in part, will be obvious from the description, or may be learned by practice of the present invention.

Exemplary embodiments of the present invention provide a method of a system to transform a stereo content to a decrease eye fatigue during viewing the 3D video images, including a calculating and smoothing unit to calculate and smooth a depth map, a control unit to control a depth, and an output unit to visualize an image using the controlled depth where a first output of the calculating and smoothing unit of a depth map is connected to a first input of the output unit, and a second output of the calculating and smoothing unit of a depth map is connected to an input of the depth control unit, and an output of the depth control unit is connected to a second input of the output unit.

Exemplary embodiments of the present invention provide systems and methods computing a depth based on a stereo content, including surfaces with uniform sites (non-textured areas), depth discontinuity sites, on occlusion sites and on sites with a repeating figure (template). That is, exemplary embodiments of the present invention provide systems and methods of determining set values of depth having increased reliability. Some values of depth, for example, for occlusion (i.e. blocked) areas, do not yield to computation through matching, as these areas are visible only on one image. Exemplary embodiments of the present invention provide a synthesized, high-quality virtual view by determining a dense map, exacting borders of depth which coincide with borders of an object, and levelling values of depth within the limits and/or boundaries of the object.

Exemplary embodiments of the present invention also provide methods and systems to detect and correct ambiguous values of depth so that synthesis of a virtual view minimizes and/or does not generate visible artefacts and provides for increased approximation to real depth. Although related art solutions describe optimization by dynamic programming, graph section, and matching of stereo pairs by segmentation, such solutions demand very high computing resources and do not allow to generate a smooth depth map, suitable for synthesis of views, free from artefacts.

Exemplary embodiments of the present invention provide fast initial depth map refinement in a local window, instead of using a global method of optimization for a computation of disparity. The initial depth map can be received by methods of local matching of stereo views. Usually, such kind of depth is very noisy, especially in areas with low texture and in the field of occlusion. Exemplary embodiments of the present invention provide using a weighted average filter to smooth an image and initial depth map refinement based on reference color images and reliable pixels of depth. Values of depth can be similar for pixels with similar colors in predetermined and/or selected positions or areas. Exemplary embodiments of the present invention can provide values of depth with increased reliability to uncertain pixels according to similarity of color and position in reference color images. The filtration of the exemplary embodiments of the present invention can specify pixels with increased reliable depth and can form a dense and smooth depth map.

Exemplary embodiments of the present invention can provide systems and methods of determining whether a current pixel is abnormal (unreliable) or not. Unreliable pixels can be marked by one or more predetermined values of a mask so that they may be detected and removed during filtration. Exemplary embodiments of the present invention provide systems and methods of determining a reliability of a pixel, where cross-checking depth values can be applied at a left side and on a right side of an image. In other words, if the difference of values of depth at the left and on the right for corresponding points is less than a predetermined threshold value, the values of depth can be reliable. Otherwise, the values can be marked as abnormal and deleted from a smoothing method. However, filters with an increased kernel size may increase the efficacy in processing abnormal pixels in cases of occlusion of object or noisiness of a depth map. Exemplary embodiments of the present invention can provide systems and methods of recursive realization to reduce the size of a kernel of the filter. As used throughout, recursive realization can be a result of filtration that is saved in an initial buffer. Recursive realization can also increase a convergence speed of an algorithm with a smaller number of iterations.

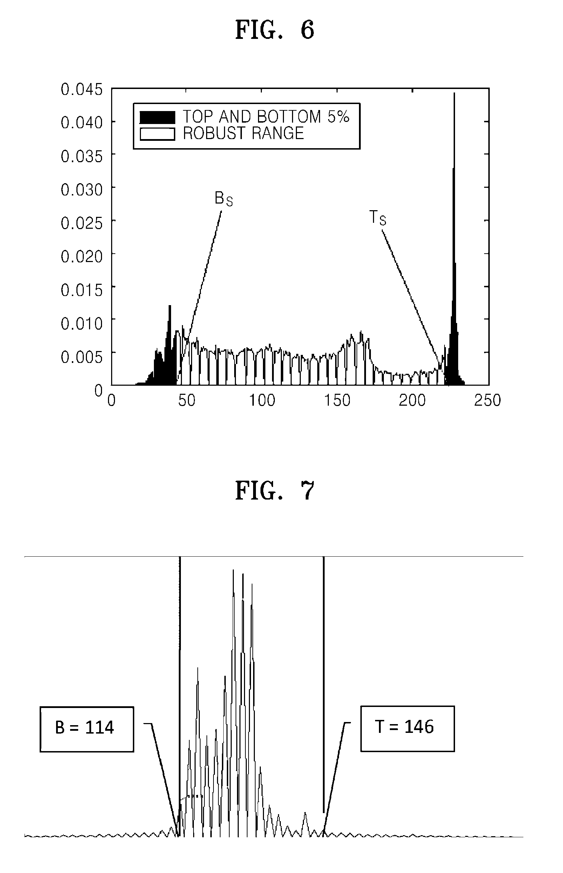

Exemplary embodiments of the present invention also provide systems and methods of detecting of abnormal pixels in a depth map by analysis of a plurality of pixels. To reduce and/or eliminate the noisiness of the raw depth map, an analysis of a histogram can be applied. Values of noisiness of the depth map can be illustrated as waves on low and high borders of the histogram (see, e.g., FIG. 7). The histogram can be modified and/or cut on at least a portion of the borders of the histogram so as to remove abnormal pixels. Exemplary embodiments of the present invention can provide an apparatus and/or method of cutting of the histogram, as well as that uses local histograms constructed according to predetermined and/or received information that can be stored in memory such that the whole image does not need to be processed.

Exemplary embodiments of the present invention can reduce and/or eliminate noise of an initial depth map in sites with low texture by using at least one smoothing of depth method on such sites, where the method includes using stronger and/or increased settings of a smoothing filter. A binary mask of textured and low textured sites of the corresponding color image can be formed, using at least one gradient filter. The filter can be a filtering method and/or filter apparatus to calculate a plurality (e.g., at least four types) of gradients in a local window.

Exemplary embodiments of the present invention also provide a method of generating a high-quality depth map, providing synthesis of a view with the adjusted parameters of depth recognition.

Exemplary embodiments of the present invention also provide a method of transforming stereo images to display three dimensional video, the method including receiving a stereo image signal with a display apparatus, determining a depth map with a processor of the display apparatus for the received stereo image signal, receiving at least one depth perception parameter with the display apparatus, and transforming the stereo image signal with the processor according to the received at least one depth perception parameters and the determined depth map and displaying the transformed stereo images on a display of the display apparatus.

Exemplary embodiments of the present invention also provide a three dimensional display apparatus to display three dimensional video, including a computation and smoothing unit to determine a depth map of a received stereo image signal, depth control unit having at least one depth perception parameter to adjust the depth map, and an output unit to generate a three dimensional image to be displayed on a display of the three dimensional display apparatus by transforming the received stereo image signal with the depth map and the at least one depth perception parameter.

The above and/or other features and utilities of the present invention will become apparent and more readily appreciated from the following description of the exemplary embodiments, taken in conjunction with the accompanying drawings, in which:

FIG. 1 is a view illustrating a system to transform a stereo content to decrease eye fatigue from a 3D video image, according to exemplary embodiments of the present invention;
FIG. 2 is a flowchart illustrating a method of transforming a stereo content to decrease eye fatigue from a 3D video image, according to exemplary embodiments of the present invention;
FIG. 3 is a view illustrating a system to compute a depth map and smooth the computed depth map, according to exemplary embodiments of the present invention;
FIG. 4 is a flowchart illustrating a method of smoothing a depth map using recursive filtration, according to exemplary embodiments of the present invention;
FIG. 5 is a view illustrating a stereo frame as a 3D video image corresponding to a pair of stereo images according to exemplary embodiments of the present invention;
FIG. 6 is a view illustrating a histogram of a depth according to exemplary embodiments of the present invention;
FIG. 7 is a view illustrating a histogram of a depth according to exemplary embodiments of the present invention;
FIG. 8 is a flowchart illustrating a method of cross-checking a depth according to exemplary embodiments of the present invention;

FIG. 9 is a flowchart illustrating a method of performing filtration of a depth according to exemplary embodiments of the present invention; and

FIG. 10 is a view illustrating filtration of a depth according to exemplary embodiments of the present invention.

Reference will now be made in detail to the embodiments of the present invention, examples of which are illustrated in the accompanying drawings, wherein like reference numerals refer to the like elements throughout.

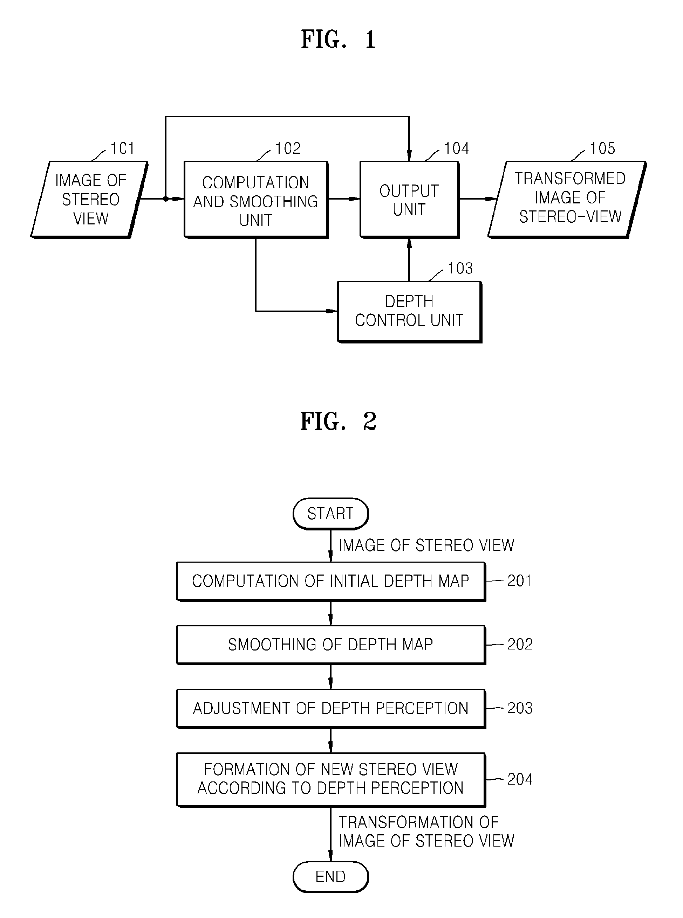

FIG.1 illustrates a system to transfer stereo content to decrease eye fatigue of a viewer from a three dimensional (3D) video image (stereo image) corresponding to a 3D video image signal, according to exemplary embodiments of the present invention. The system of FIG. 1 includes a computing and smoothing unit 102 to receive stereo image signal having a stereo image 101 and to compute and smooth the received image using a depth map, a depth control unit 103 to control depth using the depth map, and an output unit 104 to generate a new 3D video signal according to the controlled depth map to visualize a new 3D video image. The computing and smoothing unit 102 computes (e.g., calculates or generates) a depth map according to a stereo image signal (at least a pair of stereo image signal (3D image signal)) corresponding to a stereo image 101. The depth map can generate a new stereo-image 105 corresponding to the signal generated from the output unit 104 according to one or more parameters of recognition of a depth of the depth map, adjusted by the depth control unit 103. The computation and smoothing unit 102, the depth control unit 103, and/or the output unit 104 can be electrical circuits, processors, field programmable gate arrays, programmable logic units, computers, servers, and/or any other suitable devices to carry out the exemplary embodiments of the present invention disclosed herein. The computation and smoothing unit 102, the depth control unit 103, and/or the output unit 104 may be separate apparatuses, or may be combined together in whole or in part. When the computation and smoothing unit 102, the depth control unit 103, and/or the output unit 104 may be separate apparatuses, they may be communicatively coupled to one another. Alternatively, the computation and smoothing unit 102, the depth control unit 103, and/or the output unit 104 may be computer-readable codes stored on a computer-readable medium, that, when executed, provide the methods of the exemplary embodiments of the present invention provided herein. The computing and smoothing unit 102 will be described in more detail hereinafter.

Here, the depth map may be a map representing gray scale values of corresponding pixels of two stereo images which have been obtained from an object which is disposed at different distances or same distance from two cameras which are disposed on a first line. That is, when a pair of stereo images are formed or obtained on a second line parallel to the first line using lens systems of the corresponding cameras, the stereo images are disposed at positions spaced apart from third lines perpendicular to the first or second line by a first distance and a second distance, respectively. Accordingly, a disparity can be obtained from a difference between the first distance and the second distance with respect to corresponding pixels of the stereo images. The depth map can be obtained as the gray scale using the disparity of the corresponding pixels of the stereo images.

FIG. 2 illustrates a method of transforming stereo content of a 3D image to decrease eye fatigue of a user from the 3D video image according to exemplary embodiments of the present invention. The method includes operation 201 to compute an initial depth map. An initial depth map can be computed at operation 201, using, for example, standard methods of local matching of stereo views. When a raw depth map has been computed during the computation of the initial depth map at operation 201, the depth map can be smoothed at 202. At operation 202, a depth map can be smoothed by removing one or more pixels that may be determined to be abnormal from the raw depth map. The method of smoothing of a depth map will be discussed in detail below. In operation 203, an adjustment of recognition of depth of an observable 3D TV content can be performed by a change of position of images for the left and right eye (i.e., exchanging the left eye image and the right eye image). In exemplary embodiments of the present invention, a parameter D, which can change from 0 to 1, can control a perception of depth parameter. Parameter D can correspond to a position of a right view. Value 1 can correspond to an input stereo view, and value 0 can be a monocular representation, when images for the left eye and for the right eye coincide in space. In exemplary embodiments of the present invention, parameter D can be set to a value from 0.1 to 1. In operation 204, a new view can be formed for one eye (e.g., for the right eye) based on value of parameter D. The new view for the eye (e.g., right eye) can be synthesized by the interpolation according to a disparity map (e.g., as a depth map) computed at operation 203, where the map illustrates the mapping of pixels between initial images for the left and right eye. The initial image for the left eye taken together with the new image for the right eye can form a modified stereo image, which can have a reduced parallax in comparison with an initial stereo image. The generated stereo image with the reduced parallax can decrease eye fatigue of a user when viewing 3D TV.

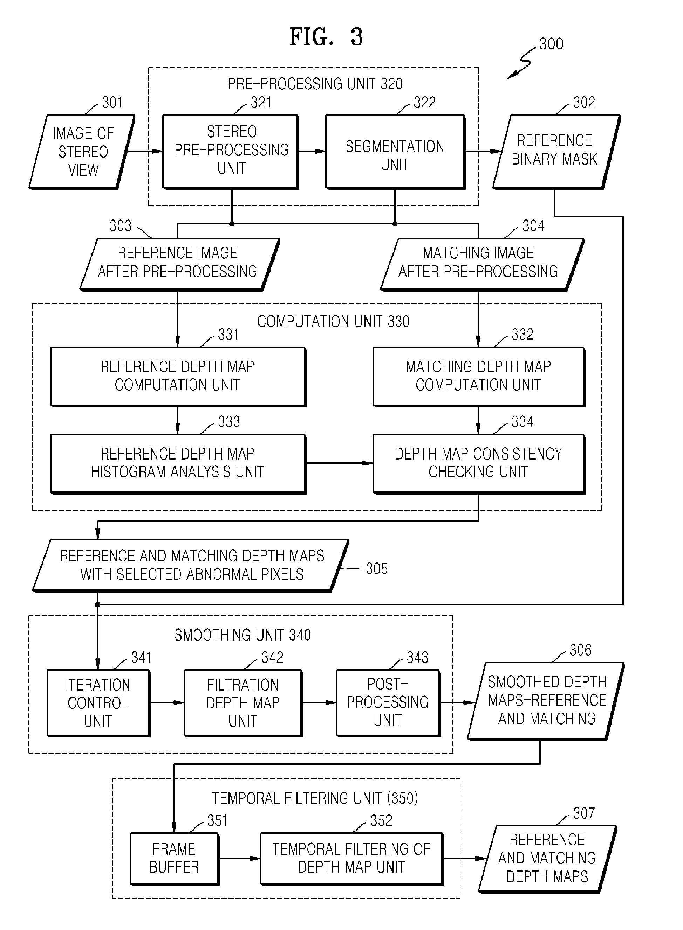

FIG. 3 illustrates a system to smooth a depth map based on a recursive filtration according to exemplary embodiments of the present invention. As illustrated in FIG. 3, a system 300 to smooth a depth map can include a pre-processing unit 320, a computation unit 330 to compute an initial depth map, a smoothing unit 340 to smooth a depth map, and a temporal filtering unit 350. In exemplary embodiments of the present invention, the pre-processing unit 320, the computation unit 330, the smoothing unit 340, and the temporal filtering unit 350 may be separate apparatuses that are communicatively coupled together in system 300. For example, the pre-processing unit 320, the computation unit 330, the smoothing unit 340, and the temporal filtering unit 350 can be electrical circuits, processors, field programmable gate arrays, programmable logic units, computers, servers, and/or any other suitable devices to carry out the exemplary embodiments of the present invention disclosed herein. Alternatively, one or more of the pre-processing unit 320, the computation unit 330, the smoothing unit 340, and the temporal filtering unit 350 can be computer readable codes stored on a computer readable medium.

A stereo image 301 can be an image of a stereo view that is input as data to the system 300. The stereo image 301 can be separate images (e.g., a left image and a right image of a stereo pair) or may be one or more video frames, received from at least one stereo-camera (not illustrated) that is coupled to the system 300. A plurality of cameras can also provide an input stereo image, where a pair of images from at least two selected camera cameras can be used to form a stereo image 301 that can be received as input by the system 300. As discussed in detail below, the system 300 can smooth a depth map to generate and/or output a dense depth map 307 for one or more of the input stereo images 301.

The pre-processing unit 320 can prepare the input stereo image 301 to be processed by the computation unit 330 to compute an initial depth map and in the smoothing unit 340 to smooth the depth map. The pre-processing unit 320 can include a stereo pre-processing unit 321 to pre-process the stereo image and a segmentation unit 322 to segment the reference image (e.g., the stereo image 301). The stereo pre-processing unit 321 can pre-process the stereo image 301 can select the separate images (e.g., left and right image of the stereo pair), corresponding to each view, from an initial stereo image (e.g., the input stereo image 301). The stereo pre-processing unit 321 can subdivide and/or separate the images by reference and matching. That is, a reference image 303 can be an image that is generated from a stereo-pair, for which the depth map can be smoothed. The matching image 304 can be the other image of the stereo-pair. Accordingly, a reference depth map can be a depth map for the reference image, and the matching depth map can be a map of the matching image.

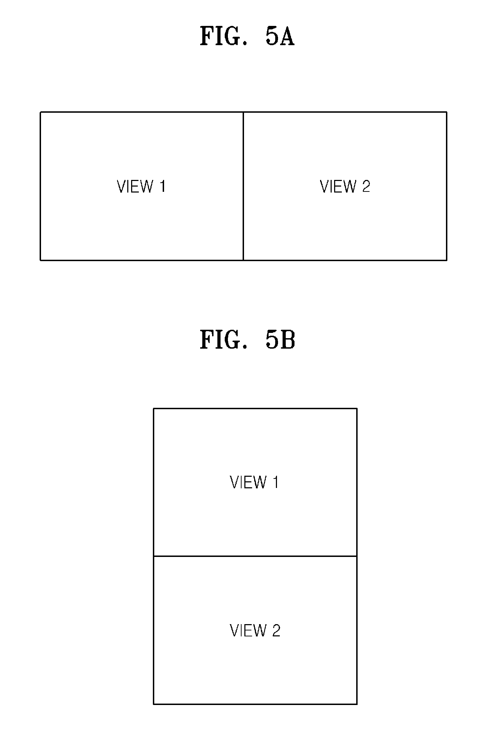

In exemplary embodiments of the present invention, the input stereo image 301 may be a video stream, which can be coded in one or more formats. The one or more formats may include, for example, a left-right orientation format, a top-bottom orientation format, a chessboard format, and a left-right orientation with division of the frames in a temporal site. These formats are merely example formats, and the input stereo image 301 may be in one or more other formats and can be processed by the system 300. Examples of the left-right orientation (501) and orientation top-bottom (502) are illustrated in FIG. 5. To compute a depth map, initial color images (e.g., images received as input to the system 300) can be processed by a spatial filter of the stereo pre-processing unit 321 to reduce and/or remove noisiness. For example, the pre-processing unit 321 can include a Gaussian filter to reduce and/or remove noisiness from one or more input images (e.g., one or more images of the stereo image 301). However, any other filter to carry out the exemplary embodiments of the present invention disclosed herein can be applied to the one or more images. The segmentation unit 322 can segment the images received from the stereo pre-processing unit 321, and can generate a reference binary mask 302. The reference binary mask 302 can correspond to segmentation of the image on sites with a high texture (e.g., a texture that is greater than or equal to a threshold texture) and a low texture (e.g., a texture that is less than a threshold texture). Pixels of the binary mask 302 can be indexed when a site (e.g., area of plurality of pixels and/or position of a pixel) is determined to have a low texture. Pixels of a mask can be indexed as a zero when the site (e.g., area of plurality of pixels and/or position of a pixel) is determined to have a high texture. A gradient filter can be used (e.g., in a local window) to detect a texture of a site.

Computation unit 330 can determine an initial depth map by making approximate computation of a depth map, using one or more methods of local matching. Computation unit 330 can include a reference depth computation unit 331, a matching depth map computation unit 332, reference depth map histogram computation unit 333, and depth map consistency checking unit 334. The reference depth computation unit 331 can determine a reference depth map, and matching depth map computation unit 332 can determine a matching depth map. In determining an initial depth map, the computation unit 330 can detect abnormal pixels on an approximate depth map. Reference depth map histogram analysis unit 333 can determine and/or cut a histogram of a depth map using a histogram of a reference depth map, and a cross-checking of a depth map can be performed by the depth map consistency checking unit 334. Reference and matching depth maps with the marked abnormal pixels 305 can be formed and output from the computation unit 330.

The smoothing unit 340 can smooth and refine a depth map by using a recursive filtration of the raw depth maps 305 (e.g., matching and reference depth maps 305 in raw form before smoothing is applied). The recursive number of iterations can be set by the iteration control unit 341. The filtration depth map unit 342 can expose a depth map to a filtration of depth. During each iteration, the iteration control unit 341 can determine criteria of convergence for filtration. In exemplary embodiments of the present invention, a first criterion of convergence can compute the residual image between adjacent computations of a disparity map. The sum of residual pixels may not exceed a threshold of convergence $T_{dec1}$ of computation of a disparity map. The criterion of convergence can be a number of iterations of a filtration of a depth map. If the number of iterations exceeds threshold $T_{dec2}$ of convergence of computation of a disparity map, the filtration can be stopped.

The post-processing unit 343 can determine final specifications of the computed depth maps. In exemplary embodiments of the present invention, the post-processing unit 343 can perform a median filtration. Other suitable filters to carry out the exemplary embodiments of the present invention disclosed herein to increase the quality of the image can be applied by the post-processing unit 343. The iteration control unit 341, the filtration depth map unit 342 and post-processing unit 343 of the smoothing unit 340 can output one or more smoothed depth maps 306 (e.g., smoothed reference and matching depth maps 306).

The temporal filtering unit 350 can filter a depth map by time. The temporal filtering unit 350 can include a frame buffer 351, which can store a plurality of frames of depth with corresponding color images, and a temporal filtering of depth map unit 352 to perform an interframe filtration of a depth map using the information from corresponding color images.

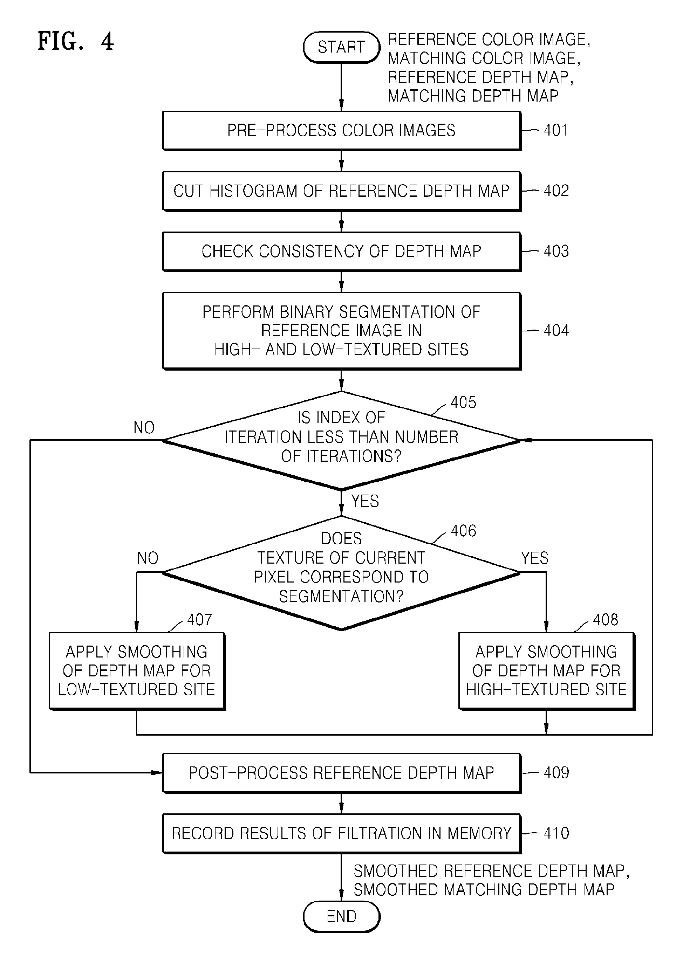

FIG. 4 illustrates a method of smoothing of a depth map based on recursive filtration according to exemplary embodiments of the present invention. At operation 401, color images can be pre-processed by, for example, a filtration of color images by a Gaussian filter in a predetermined pixel area (for example, 5x5 pixels). The filtration can suppress noise of color images. The filtration can improve the quality of smoothing of a depth map, as weighed averages of the neighboring pixels can be used to smooth a depth map using weights that are calculated based on color images. Cutting of the histogram of a reference depth map can occur at operation 402. Cutting of the histogram can be performed to suppress noise of a depth map. The raw depth map can include a plurality of abnormal pixels. Noise can occur because of incorrect matching in occlusion sites and on sites with low texture (e.g., sites having a texture less than or equal to a predetermined threshold). In exemplary embodiments of the present invention, threshold values can be used that include a threshold $B$ in the bottom part of the histogram and threshold $T$ in the top part of the histogram. These thresholds can be calculated from set numbers $\alpha$ and $\beta$ of a percentage of abnormal pixels. $\alpha$ can be a ratio of pixels of the image, which lay below cut of histogram, to all pixels of the image. $\beta$ can be a ratio of pixels of the image, which lay above top cut of histogram, to all pixels of the image. Thresholds $B$ and $T$ can be calculated as follows:

$$B = \sum_{c=0}^{B} H(c) = \alpha N_x N_y \qquad\qquad T = \sum_{c=T}^{M} H(c) = \beta N_x N_y ,$$

where $H(c)$ is a value of a histogram;

$M$ is a maximum level of pixel (e.g., the $M$ value can equal 255 for one-byte representation);

$N_x$ is a width of an image; and

$N_y$ is a height of the image.

An example threshold, corresponding to $\alpha = \beta = 5$ % of pixels of the image, is illustrated in FIG. 6. That is, five percent of the darkest and five percent of the brightest sites of the histogram can be in black color. In this example, $B$ can have a value of 48, and T can have a value of 224.

An example of cutting a histogram of a depth map is illustrated in FIG. 7. The histogram of FIG. 7 can include all data of the image. The histogram of depth with cutting of thresholds for six percent of the darkest and three percent of the brightest pixels is illustrated in FIG. 7. That is, the cutting of thresholds is for six percent of the darkest pixels, and three percent of the brightest pixels.

The local histogram can be calculated using information stored in memory.

At operation 403 illustrated in FIG. 4, the consistency (uniformity) of a depth map can be checked and/or determined. Consistent pixels can be detected, where consistent pixels can be pixels for which a depth map is computed to meet a predetermined standard. The method of smoothing of a depth map according to exemplary embodiments of the present invention can be based on cross-checking, so as to detect abnormal pixels.

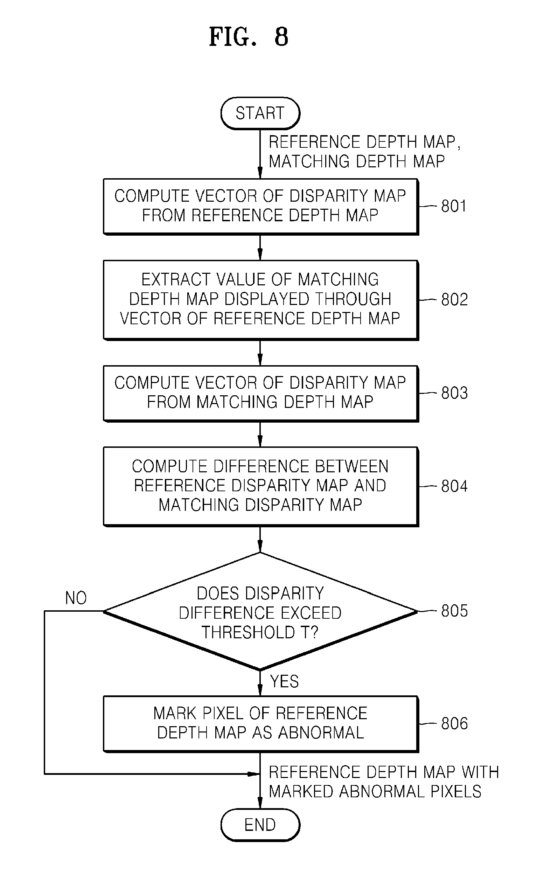

FIG. 8 illustrates operation 403 that checks the consistency of the depth map in FIG. 4 in greater detail.

At operation 801, a vector of reference disparity map (reference disparity vector - "RDV") can be computed according to values of reference depth map.

A value of a matching depth map can be extracted at operation 802, and can be displayed through the RDV.

A vector matching a disparity map (matching disparity vector - "MDV") can be determined at least according to values of a matching depth map at operation 803. A difference of disparity maps (disparity difference -"DD") of absolute values RDV and MDV can be calculated at operation 804.

Operation 805 determines whether a disparity difference exceeds a predetermined threshold value $T$. When a disparity difference ("DD") exceeds a predetermined threshold, the pixel of reference depth map can be marked as abnormal at operation 806. When the pixel is marked as abnormal at operation 806, or if the disparity difference does not exceed the predetermined threshold $T$, a reference depth map which may include marked abnormal pixels can be output.

Turning again to FIG. 4, binary segmentation of the reference color image can be performed on sites with the high and low texture at operation 404. Purpose gradients in a plurality of directions (e.g., four directions) can be calculated.

These directions can include, for example, horizontal, vertical and diagonal directions. Gradients can be calculated as the sum of absolute differences of the neighboring pixels of corresponding directions. When values of all gradients are below a predetermined threshold value, one or more pixels can have a low texture, otherwise, the pixels can have a high texture. It can be formulated as follows:

$$BS(\mathrm{x,y}) = \begin{cases} 255, & \text{if gradients } (x,y) < \text{threshold } T \\ 0, & \text{otherwise} \end{cases}$$

where *BS* can be a binary mask of segmentation for pixel with coordinates (x, y), and where a value of 255 corresponds to pixel of low textured image, and a value 0 corresponds to pixel with high texture. The values of 255 and 0 are merely exemplary, and values of pixels for a low textured image and a high textured image, respectively, are not limited thereto.

When the left color image in sites with low texture has been segmented from the site having high texture, filtration can be performed at operations 405 - 408. An index of iterations can be initialized and/or set to zero. The index of iterations can be increased after each iteration of smoothing. When the index value becomes equal to a number of iterations, filtration can begin. At operation 406, a type of pixel can be detected according to a binary mask of segmentation. The filter of smoothing of a depth map with settings by default can be applied when the pixel has a high texture at operation 408 (e.g., the pixel is determined to have a texture that is greater than a predetermined texture value). Otherwise, a pixel may have a low texture, and the filter to smooth a depth map with settings for stronger smoothing, providing an increased suppression of noise, is applied at operation 407.

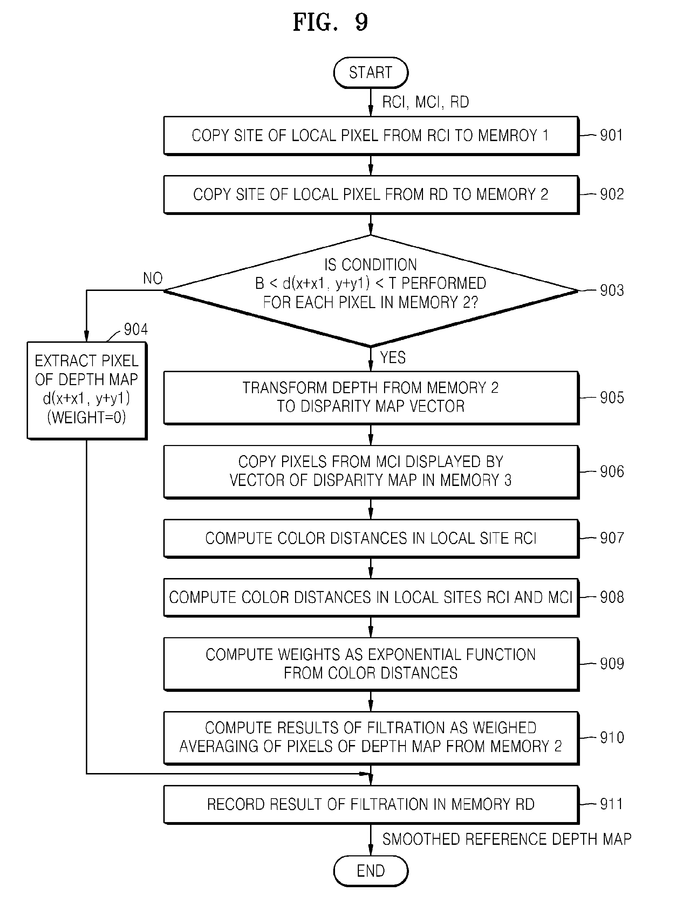

Operations 407 and 408 of applying a smoothing filter of a depth map are illustrated in FIG. 9. Buffers of memory can store corrections of local images that are recorded, instead of the image entirely. Table 1 below illustrates buffers of memory (e.g., memory buffers that may be included in the system illustrated in FIG. 1 and described above, and/or the system 300 illustrated in FIG. 3 and described above, where the memory may be any suitable memory device and/or storage device) that are used in the method of smoothing a depth map.

Table 1: Buffers of memory

| Index of buffer of memory | Description of saved (recorded) data | Size of buffer |
|---|---|---|
| 1 | Local site from reference color image | Size of kernel * Number of lines * Number of color channels |
| 2 | Local site from reference depth map | Size of kernel * Number of lines |
| 3 | Pixels of matching color image, displayed by vector of reference disparity map | Size of kernel * Number of lines * Number of color channels |

In a method of filtration to smooth a depth map, a stereo pair of color images (left and right) can be an input to the method, as well as a raw depth map that is computed for at least one color image. The image from the stereo pair, for which smoothing of depth map is performed, can be a reference color image (RCI), while another image can be a matching color image (MCI). Accordingly, the smoothed depth map can be a reference depth map (reference depth - "RD"). The left raw depth map can be a reference depth map, and processing can be similar for the right raw depth map. FIG. 9 illustrates one iteration of smoothing. Although, in exemplary embodiments of the present invention, a plurality of iterations of smoothing may be performed. When more than one iteration is needed, the whole image of a depth map may be processed, with the result recorded in RD memory, and the same buffer of memory can be used with the updated data on an input.

In FIG. 9, operation 901 copies an area of pixels from the reference color image (RCI) in memory 1 (e.g., the memory 1 illustrated in Table 1) to be processed. In exemplary embodiments of the present invention, the height of a window can be equal to a number of available lines (e.g., the number of horizontal lines of pixels in an image). At operation 902, pixels can be copied from a reference depth map (RD) in memory 2 (e.g., the memory 2 illustrated in Table 1). Whether the pixel from the raw depth map is abnormal or not is checked at operation 903. The threshold values *B* and *T*, which are calculated by the analysis of the histogram, can be used.

In exemplary embodiments of the present invention, the equation to check a range of a depth map can be as follows:

$$B < d(x+x_1, y+y_1) < T \qquad (1)$$

where $d(x, y)$ can be a pixel of a raw depth map having the coordinates $(x+x_1, y+y_1)$, where $(x,y)$ are coordinates of the image of current pixel of a depth map, for which filtration can be performed, and where $x_1, y_1$ are indexes of pixels of a reference depth map that can be recorded in the memory 2 (e.g., illustrated above in Table 1).

If the inequality (1) is not executed (e.g., does not hold true), the corresponding pixel of a depth map $d(x+x_1, y+y_1)$ may not be taken into consideration for a filtration of pixel $d(x, y)$ at operation 904, and at least one pixel from memory 2 is checked for an anomaly (e.g., all pixels of the memory 2 can be checked). If all pixels are identified abnormal, a current pixel of a depth map can be utilized without additional processing. The raw depth map can include a plurality of erroneous pixels. To provide and/or increase effective filtration of such areas by the filter with a small window, a recursive filter can be applied that is result of a filtration of current pixel which can be recorded in an initial depth map. The above-described operations can distribute correct values of a depth map to erroneous areas.

Values of a disparity map can be calculated based on the pixels of a depth map, and can be recorded in memory 2 (illustrated in Table 1) at operation 905. Corresponding disparity maps can be used as coordinates for color pixels in the matching color image (MCI) when computation of vectors of a disparity map are determined from values of a depth map. Pixels from MCI, presented by disparity map, can be copied in memory 3 (illustrated in Table 1) at operation 906.

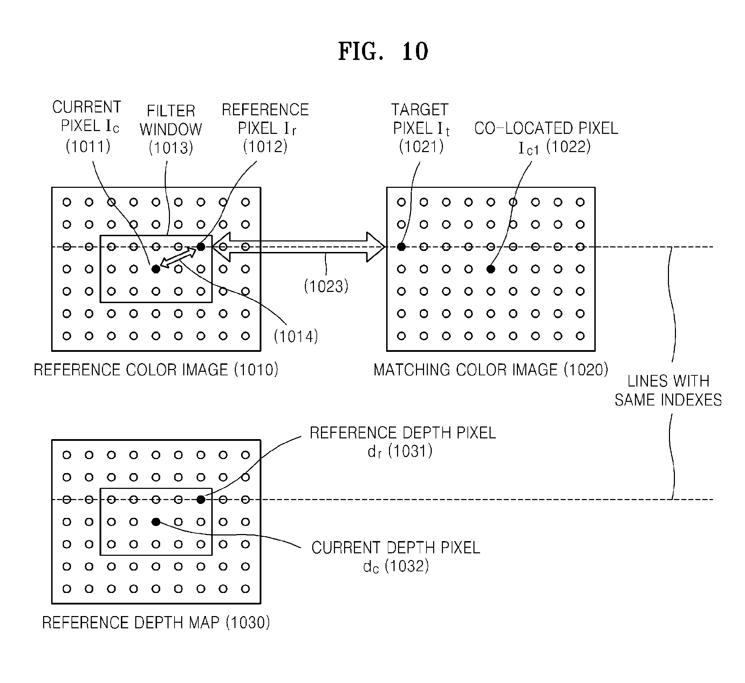

As illustrated in FIG. 10, the smoothing of a depth map can include specifying the raw reference depth map (e.g., reference depth map 1030) by applying weighed averaging of pixels of a depth map, located in a window of the filter (e.g., filter window 1013 in reference color image 1010). Weights of the filter can be computed using the information received from color images. In FIG. 10, a current pixel (e.g., current color pixel $I_c$ 1011) upon which filtration has been performed, can be marked (e.g., marked by a color, such as a red color). In all images (RCI, MCI, RD), the spatial coordinates of this pixel can be similar and/or identical. For computation of weight, the smoothing filter can compute at least two color distances. Described below is a method of computing these distances.

The first color distance between current color pixel $I_c$ (e.g., current color pixel $I_c$ 1011 as illustrated in FIG. 10) and reference pixel $I_r$ (e.g., reference pixel $I_r$ 1012 as illustrated in FIG. 10) in the reference color image 1010 can be computed at operation 907 illustrated in FIG. 9. Both pixels (e.g., current color pixel $I_c$ 1011 and reference pixel $I_r$ 1012) can be recorded into memory 1 (illustrated in Table 1). The first color distance can be a Euclidean distance, and is computed as follows:

$$C(I_c, I_r) = \sqrt{\sum_{T \in \{R,G,B\}} (I_T(x_c, y_c) - I_T(x_r, y_r))^2} \qquad (2)$$

where the quadratic difference of each color channel (e.g., red (R), green (G), and blue (B) channels) can be summed, and a square root can be extracted from it. As illustrated in FIG. 10, the arrow 1014 illustrates a calculated first color distance between the current color pixel $I_c$ 1011 and the reference pixel $I_r$ 1012.

A computation of the second color distance (e.g., as illustrated by arrow 1023) can be between reference pixel $I_r$ (e.g., reference pixel $I_r$ 1012 of reference color image 1010 as illustrated in FIG. 10) and final (target) pixel $I_t$ (e.g., target pixel $I_t$ 1021 of matching color image 1020 as illustrated in FIG. 10) can be performed at operation 908. A final pixel (e.g., target pixel $I_t$ 1021) can be a pixel in the matching image which can be displayed by a vector of a disparity map of pixel $I_r$. As this disparity map is one-dimensional (e.g., it is a horizontal disparity map), reference pixel $I_r$ 1012 and target pixel $I_t$ 1021 may be disposed on lines with identical indexes as illustrated in FIG. 10. The equation (2) can be used to determine a color distance. FIG. 10 illustrates arrow 1023, which illustrates the second color distance that is computed between reference pixel $I_r$ 1012 and the target pixel $I_t$ 1021.

When the two color distances (e.g., the first color distance and the second color distance as described above) have been determined, the weight of a pixel of a reference depth map (e.g., reference depth map 1030 illustrated in FIG. 10) can be calculated at operation 909 as follows:

$$w_r = e^{\frac{-C(x_r, y_r)}{\sigma_r} - \frac{C(x_t, y_t)}{\sigma_t}}, \qquad (3)$$

where *C()* is a function to compare the color of pixels (e.g., the reference depth pixel $d_r$ 1031 and the current depth pixel $d_c$ 1032 illustrated in FIG. 10), $\sigma_r$ is a parameter to smooth a depth map for a reference pixel (e.g., reference depth pixel $d_r$ 1031 illustrated in FIG. 10) in a reference image, $\sigma_t$ is a parameter to smooth a depth map for a target pixel in a matching image, $(x_r, y_r)$ can be coordinates of a reference pixel, and $(x_t, y_t)$ can be coordinates of a target pixel. In exemplary embodiments of the present invention, $y_t$ can be equal to $y_r$ for a one-dimensional depth map. When the computations of weight for each pixel of a reference depth map (e.g., reference depth map 1030 illustrated in FIG. 10) have been determined, the weighed averaging can be calculated at operation 910. A value of the weighed averaging can be computed as follows:

$$d_{out}(x_c, y_c) = \frac{1}{Norm} \cdot \sum_{s=-\lfloor K/2 \rfloor}^{\lfloor K/2 \rfloor} \sum_{p=-\lfloor L/2 \rfloor}^{\lfloor L/2 \rfloor} w_r \cdot d_{in}(x_r, y_r) \qquad (4)$$

where $d_{out}(x_c, y_c)$ can be a result of smoothing a depth map for a current pixel with coordinates $(x_c, y_c)$,

$d_{in}(x_r, y_r)$ can be the raw depth map for a reference pixel with coordinates $(x_r=x_{c+p}, y_r=y_{c+s})$,

$w_r$ can be a weight of a pixel of a reference depth map,

index *p* can change from *-L/2* up to *L/2* in direction X,

index *s* can change from *-K/2* up to *K/2* in direction Y, and normalizing factor can be computed as

$$Norm = \sum_{s=-\lfloor K/2 \rfloor}^{\lfloor K/2 \rfloor} \sum_{p=-\lfloor L/2 \rfloor}^{\lfloor L/2 \rfloor} w_r .$$

The result of a filtration $d_{out}(x_c, y_c)$ can be stored in memory RD at operation 911.

When a predetermined number of iterations of smooth filtering a depth map have been performed, a reference depth map can be post-processed at operation 409 as illustrated in FIG. 4. In exemplary embodiments of the present invention, a median filter can be used to post-process the reference depth map, so as to delete and/or reduce a pulse noise of a disparity map. When the reference depth map is smoothed during post-processing, it can be recorded in memory RD at operation 410.

A temporal filter can be a sliding average that can be applied to a depth map to reduce and/or eliminate an effect of blinking (bounce) during viewing of a 3D video. The filter can use a plurality of smoothed depth maps, which can be stored in the frame buffer 351 illustrated in FIG. 3, and can filter a frame of a depth map at an output of a current mark of time.

Exemplary embodiments of the present invention as disclosed herein can process 3D images and/or video content in 3D TV apparatuses so as to remove and/or reduce eye fatigue during viewing. As viewers have individual differences and preferences at viewing stereoscopic images, eye fatigue when viewing 3D TV can occur. A viewer's sex, age, race, and distance between the eyes can influence the viewer's preferences in stereoscopy as each individual is unique, and may have unique preferences in a system of 3D visualization. Unwanted and/or undesired content at transfer of stereo sequences can lead to eye fatigue of a viewer. The unwanted and/or undesired content of stereo image sequences can includes parallax values that are greater than a predetermined threshold, cross noises, conflict between signals of depth, and so on.

In exemplary embodiments of the present invention disclosed herein can provide depth control to decrease eye fatigue. A manual adjustment can be performed, where a 3D TV apparatus can receive input parameters from an input unit, where the input parameters may be according to a user's personal preferences for 3D viewing, where one or more of the input parameters can adjust the display of the 3D images so as to reduce user eye fatigue. In exemplary embodiments of the present invention, an application can perform one or more functions on the display of 3D images to decrease eye fatigue, control a depth of display, and increase comfort at viewing broadcasts of 3D TV. A depth improvement function can be used when a depth map has been computed for pre-processing parameters of depth before changing a depth map or to show the new frames.

Exemplary embodiments of the present invention can be used in stereo cameras to form a high-quality and reliable map of disparity and/or depth. Exemplary embodiments of the present invention can be provided in multi-camera systems or in other image capture devices, in which two separate video streams can be stereo-matched to form a 3D image stream.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present invention can be easily construed by programmers skilled in the art to which the present invention pertains.

Although several embodiments of the present invention have been illustrated and described, it would be appreciated by those skilled in the art that changes may be made in these embodiments without departing from the principles of the present invention, the scope of which is defined in the claims.

**Claims**

1. A method of transforming stereo content to decrease eye fatigue of a user from a three dimensional (3D) video image, the method comprising:

   computing an initial depth map of stereo images from a 3D video signal;
   smoothing the computed depth map;
   changing depth perception parameters of the smoothed depth map according to an estimation of eye fatigue; and
   generating a new stereo image as the 3D video image according to the changed depth perception parameters.

2. The method of claim 1, wherein one of the depth perception parameters is a parameter D, which changes from 0 to 1, where the parameter D corresponds to a first eye position view, and value 1 is an initial stereo image, value 0 is a monocular view, where the image for the first eye position and second eye position coincide, and where corresponding settings of the parameter D are in a range from 0.1 to 1.

3. The method of claim 2, further comprising:

   interpolating a view for the first eye position according to a disparity map, where the view of the first eye position is described by the parameter D.

4. The method of claim 3, wherein the interpolated view of the first eye position is used together with an initial image for the second eye position to form a modified stereo image, which has a decreased parallax in comparison with an image of an initial stereo view.

5. The method of claim 1, wherein the smoothing of the computed depth map is performed based on consecutive iterations of a filtration of the initial depth map, including:

   performing pre-processing of an input stereo image of stereo images from the 3D video signal;
   performing computation of the initial depth map;
   analyzing and cutting a histogram of the depth map;
   checking a consistency of the depth map;
   forming a binary mask of the reference color image according to sites with a predetermined high texture and sites with a predetermined low texture;
   performing smoothing of reference and matching depth maps by consecutive iterations of filtration of the depth maps;
   performing filtration of the reference depth map according to the binary mask of the reference image on the sites with the predetermined high texture and sites with the predetermined low texture;
   performing post-processing of the reference and matching depth maps; and
   performing temporal filtering of the reference and matching depth maps.

6. The method of claim 5, wherein the pre-processing of the input stereo image is performed using smoothing by a local filter.

7. The method of claim 5, wherein the checking of the consistency of the depth map is performed using a cross-checking of the depth map.

8. The method of claim 5, wherein the post-processing of the depth map includes using a median filter.

9. The method of claim 5, wherein temporal filtering includes using a sliding averages filter.

10. A system to transform a stereo content to reduce eye fatigue when a user views a three-dimensional (3D) video, the system comprising:

a computation and smoothing unit to compute a depth map of stereo images from a 3D video signal and to smooth the depth map;
a depth control unit to adjust a depth perception; and
an output unit to visualize a new stereo image using the depth map according to the adjusted depth perception.

11. The system of claim 10, wherein the computation and smoothing unit comprises:

a pre-processing unit to pre-process an input stereo image from the 3D video signal;
a computation unit to determine an initial depth map to approximate a computation of the depth map;
a smoothing unit to refine and smooth the depth map by recursive filtration of a raw depth map; and
a temporal filtering unit to temporally filter the smoothed depth map.

12. The system of claim 11, wherein the pre-processing unit comprises:

a stereo pre-processing unit to separate a reference image and a matching image from the input stereo image; and
a segmentation unit to generate a reference binary mask.

13. The system of claim 12, wherein the computation unit comprises:

a reference depth map computation unit to determine a depth map of a reference image received from the pre-processing unit;
a matching depth map computation unit to determine a depth map of a matching image received from the pre-processing unit;
a reference depth map histogram analysis unit to cut a histogram from the reference depth map; and
a depth map consistency checking unit to cross-check the reference depth map and the matching depth map.

14. The system of claim 11, wherein smoothing unit comprises:

an iteration control unit to determine a number of iterations of recursive filtration;
a filtration depth map unit to filter the depth map; and
a post-processing unit to define the filtrated depth map.

15. The system of claim 11, wherein the temporal filtering unit comprises:

a frame buffer to store at least one depth frame including color images in the depth map; and
a temporal filtering of a depth map unit to perform interframe filtration of the depth map by using predetermined information stored in the color images.

# FIG. 1

# FIG. 2

# FIG. 3

300

**PRE-PROCESSING UNIT 320**

301
IMAGE OF
STEREO
VIEW

321
STEREO
PRE-PROCESSING
UNIT

322
SEGMENTATION
UNIT

302
REFERENCE
BINARY MASK

303
REFERENCE IMAGE
AFTER PRE-PROCESSING

304
MATCHING IMAGE
AFTER PRE-PROCESSING

**COMPUTATION UNIT 330**

331
REFERENCE DEPTH MAP
COMPUTATION UNIT

332
MATCHING DEPTH MAP
COMPUTATION UNIT

333
REFERENCE DEPTH MAP
HISTOGRAM ANALYSIS UNIT

334
DEPTH MAP CONSISTENCY
CHECKING UNIT

REFERENCE AND MATCHING DEPTH MAPS
WITH SELECTED ABNORMAL PIXELS
305

**SMOOTHING UNIT 340**

341
ITERATION
CONTROL
UNIT

342
FILTRATION
DEPTH MAP
UNIT

343
POST-
PROCESSING
UNIT

306
SMOOTHED DEPTH
MAPS-REFERENCE
AND MATCHING

**TEMPORAL FILTERING UNIT (350)**

351
FRAME
BUFFER

352
TEMPORAL FILTERING OF
DEPTH MAP UNIT

307
REFERENCE
AND MATCHING
DEPTH MAPS

**FIG. 4**

```
                          ┌─────────┐   REFERENCE COLOR IMAGE,
                          │  START  │   MATCHING COLOR IMAGE,
                          └─────────┘   REFERENCE DEPTH MAP,
                               │        MATCHING DEPTH MAP
                               ▼
              ┌──────────────────────────────────┐
              │     PRE-PROCESS COLOR IMAGES      │─── 401
              └──────────────────────────────────┘
                               │
                               ▼
              ┌──────────────────────────────────┐
              │ CUT HISTOGRAM OF REFERENCE DEPTH MAP │─── 402
              └──────────────────────────────────┘
                               │
                               ▼
              ┌──────────────────────────────────┐
              │   CHECK CONSISTENCY OF DEPTH MAP  │─── 403
              └──────────────────────────────────┘
                               │
                               ▼
              ┌──────────────────────────────────┐
              │  PERFORM BINARY SEGMENTATION OF   │
              │        REFERENCE IMAGE IN         │─── 404
              │   HIGH- AND LOW-TEXTURED SITES    │
              └──────────────────────────────────┘
                               │
                               ▼
```

IS INDEX OF ITERATION LESS THAN NUMBER OF ITERATIONS? — 405

NO

YES

DOES TEXTURE OF CURRENT PIXEL CORRESPOND TO SEGMENTATION? — 406

NO

YES

APPLY SMOOTHING OF DEPTH MAP FOR LOW-TEXTURED SITE — 407

APPLY SMOOTHING OF DEPTH MAP FOR HIGH-TEXTURED SITE — 408

POST-PROCESS REFERENCE DEPTH MAP — 409

RECORD RESULTS OF FILTRATION IN MEMORY — 410

SMOOTHED REFERENCE DEPTH MAP, SMOOTHED MATCHING DEPTH MAP

END

FIG. 5A

| | |
|---|---|
| VIEW 1 | VIEW 2 |

FIG. 5B

| |
|---|
| VIEW 1 |
| VIEW 2 |

## FIG. 6

## FIG. 7

# FIG. 8

```
        ( START )
            │  REFERENCE DEPTH MAP,
            │  MATCHING DEPTH MAP
            ▼
┌─────────────────────────────┐
│ COMPUTE VECTOR OF DISPARITY  │── 801
│ MAP FROM REFERENCE DEPTH MAP │
└─────────────────────────────┘
            ▼
┌─────────────────────────────┐
│ EXTRACT VALUE OF MATCHING    │
│ DEPTH MAP DISPLAYED THROUGH  │── 802
│ VECTOR OF REFERENCE DEPTH MAP│
└─────────────────────────────┘
            ▼
┌─────────────────────────────┐
│ COMPUTE VECTOR OF DISPARITY  │── 803
│ MAP FROM MATCHING DEPTH MAP  │
└─────────────────────────────┘
            ▼
┌─────────────────────────────┐
│ COMPUTE DIFFERENCE BETWEEN   │
│ REFERENCE DISPARITY MAP AND  │── 804
│ MATCHING DISPARITY MAP       │
└─────────────────────────────┘
            ▼
          ◇ DOES DISPARITY
   NO   ◇ DIFFERENCE EXCEED ◇── 805
 ◄──────◇    THRESHOLD T?   ◇
          ◇
            │ YES
            ▼
┌─────────────────────────────┐
│ MARK PIXEL OF REFERENCE      │── 806
│ DEPTH MAP AS ABNORMAL        │
└─────────────────────────────┘
            │  REFERENCE DEPTH MAP WITH
            │  MARKED ABNORMAL PIXELS
            ▼
          ( END )
```

# FIG. 9

START

RCI, MCI, RD

COPY SITE OF LOCAL PIXEL FROM RCI TO MEMROY 1 — 901

COPY SITE OF LOCAL PIXEL FROM RD TO MEMORY 2 — 902

IS CONDITION
B < d(x+x1, y+y1) < T PERFORMED
FOR EACH PIXEL IN MEMORY 2? — 903

NO

EXTRACT PIXEL
OF DEPTH MAP
d(x+x1, y+y1)
(WEIGHT=0) — 904

YES

TRANSFORM DEPTH FROM MEMORY 2
TO DISPARITY MAP VECTOR — 905

COPY PIXELS FROM MCI DISPLAYED BY
VECTOR OF DISPARITY MAP IN MEMORY 3 — 906

COMPUTE COLOR DISTANCES IN LOCAL SITE RCI — 907

COMPUTE COLOR DISTANCES IN LOCAL SITES RCI AND MCI — 908

COMPUTE WEIGHTS AS EXPONENTIAL FUNCTION
FROM COLOR DISTANCES — 909

COMPUTE RESULTS OF FILTRATION AS WEIGHED
AVERAGING OF PIXELS OF DEPTH MAP FROM MEMORY 2 — 910

RECORD RESULT OF FILTRATION IN MEMORY RD — 911

SMOOTHED REFERENCE DEPTH MAP

END

# FIG. 10

CURRENT PIXEL $I_c$ (1011)  FILTER WINDOW (1013)  REFERENCE PIXEL $I_r$ (1012)

TARGET PIXEL $I_t$ (1021)  CO-LOCATED PIXEL $I_{c1}$ (1022)

(1023)

(1014)

REFERENCE COLOR IMAGE (1010)

MATCHING COLOR IMAGE (1020)

LINES WITH SAME INDEXES

REFERENCE DEPTH PIXEL $d_r$ (1031)

CURRENT DEPTH PIXEL $d_c$ (1032)

REFERENCE DEPTH MAP (1030)

EP 2 293 586 A1

Europäisches
Patentamt
European
Patent Office
Office européen
des brevets

# EUROPEAN SEARCH REPORT

Application Number

EP 10 17 1778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/052794 A1 (HA TAE-HYEUN [KR] ET AL) 8 March 2007 (2007-03-08) * page 1, paragraph 8 - page 6, paragraph 95; figures 6A-6C, 8, 9A-9C, 10-12,16 * ----- | 1-15 | INV. H04N13/00 |
| Y | WO 2009/061305 A1 (THOMSON LICENSING [FR]; ZHANG DONG-QING [US]; IZZAT IZZAT [US]) 14 May 2009 (2009-05-14) * page 10, line 1 - page 15, line 14; figures 1-4, 5A-5D * ----- | 1-15 | |
| Y | WA JAMES TAM ET AL: "Smoothing depth maps for improved stereoscopic image quality" PROCEEDINGS OF THE INTERNATIONAL SOCIETY FOR OPTICAL ENGINEERING (SPIE), SPIE, USA LNKD- DOI:10.1117/12.583105, vol. 5599, no. 1, 1 January 2004 (2004-01-01), pages 162-172, XP008080556 ISSN: 0277-786X * page 163, line 1 - page 171, line 36; figures 2-8 * ----- | 3,4 | |
| A | LIANG ZHANG ET AL: "Stereoscopic image generation based on depth images" IMAGE PROCESSING, 2004. ICIP '04. 2004 INTERNATIONAL CONFERENCE ON SINGAPORE 24-27 OCT. 2004, PISCATAWAY, NJ, USA,IEEE LNKD- DOI:10.1109/ICIP.2004.1421742, vol. 5, 24 October 2004 (2004-10-24), pages 2993-2996, XP010786426 ISBN: 978-0-7803-8554-2 * page 2993, left-hand column, line 17 - page 2996, right-hand column, line 35; figures 2-6 * ----- | 1-15 | TECHNICAL FIELDS SEARCHED (IPC) H04N G06T |

The present search report has been drawn up for all claims

| Place of search | Date of completion of the search | Examiner |
|---|---|---|
| Munich | 7 October 2010 | Dinov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 1778

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2010

| Patent document cited in search report | | Publication date | Patent family member(s) | | Publication date |
|---|---|---|---|---|---|
| US 2007052794 | A1 | 08-03-2007 | CN | 1956554 A | 02-05-2007 |
| | | | KR | 20070025632 A | 08-03-2007 |
| | | | NL | 1032380 C2 | 26-01-2010 |
| | | | NL | 1032380 A1 | 06-03-2007 |
| WO 2009061305 | A1 | 14-05-2009 | CA | 2704479 A1 | 14-05-2009 |
| | | | EP | 2213102 A1 | 04-08-2010 |

For more details about this annex : see Official Journal of the European Patent Office, No. 12/82